# EUROPEAN PATENT APPLICATION

(11) **EP 4 726 833 A1**
(43) Date of publication of application: **15.04.2026**
(21) Application number: 25822440.1
(22) Date of filing: 25.03.2025
(51) Int. Cl.: H01M 10/04, H01M 50/105

(54) **SECONDARY BATTERY PRESSING DEVICE AND SECONDARY BATTERY PRESSING METHOD USING SAME**

(30) Priority: 11.06.2024 KR 20240075461
(71) Applicant: LG Energy Solution, Ltd., Seoul 07335 (KR)
(72) Inventor: YOON, Tae Keon, Daejeon 34122 (KR)
(74) Representative: Goddar, Heinz J.
(86) International application number: PCT/KR2025/003806
(87) International publication number: WO 2025/258808

(57) **Abstract**

Disclosed are a secondary battery pressing apparatus for pressing a secondary battery including a battery case receiving an electrode assembly having a pair of electrode leads located opposite each other and a sealed portion at an edge of the battery case, the secondary battery pressing apparatus including a pair of pressing plates configured to press one surface and an other surface of the battery case and a pair of tight contact members configured to be brought into tight contact with a corner portion of the battery case by the pair of pressing plates, and a pressing method using the same.

## Description

### [Technical Field]

This application claims the benefit of priority to Korean Patent Application No. 10-2024-0075461 filed on June 11, 2024, the disclosure of which is incorporated herein by reference in its entirety.

The present invention relates to a secondary battery pressing apparatus and a secondary battery pressing method using the same, and more particularly to a secondary battery pressing apparatus capable of uniformly pressing the entirety of a secondary battery and a secondary battery pressing method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

A typical pouch-shaped secondary battery manufacturing process includes inserting an electrode assembly into a receiving space of a battery case made of a laminate sheet, filling the battery case with an electrolyte solution, sealing the battery case, and performing an activation process, wherein a formation jig configured to press a battery cell is used in the activation process.

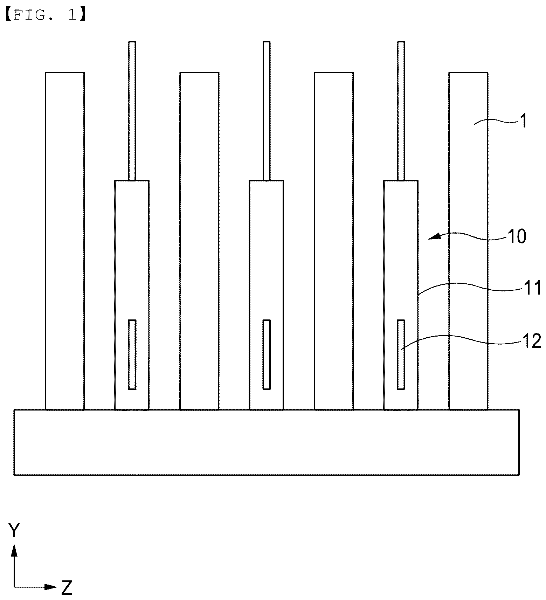

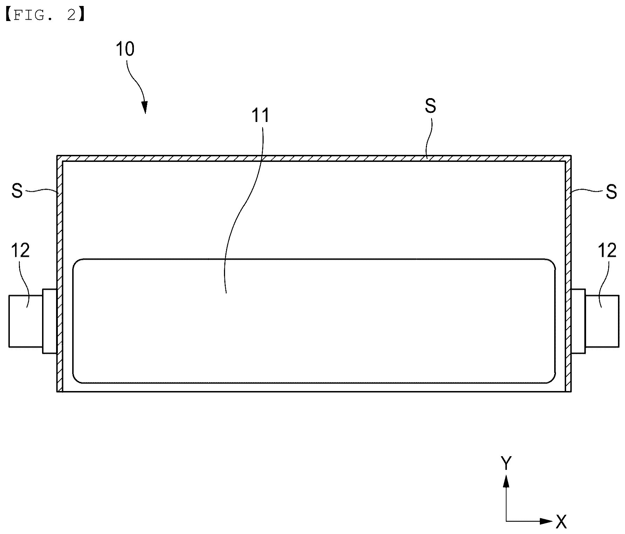

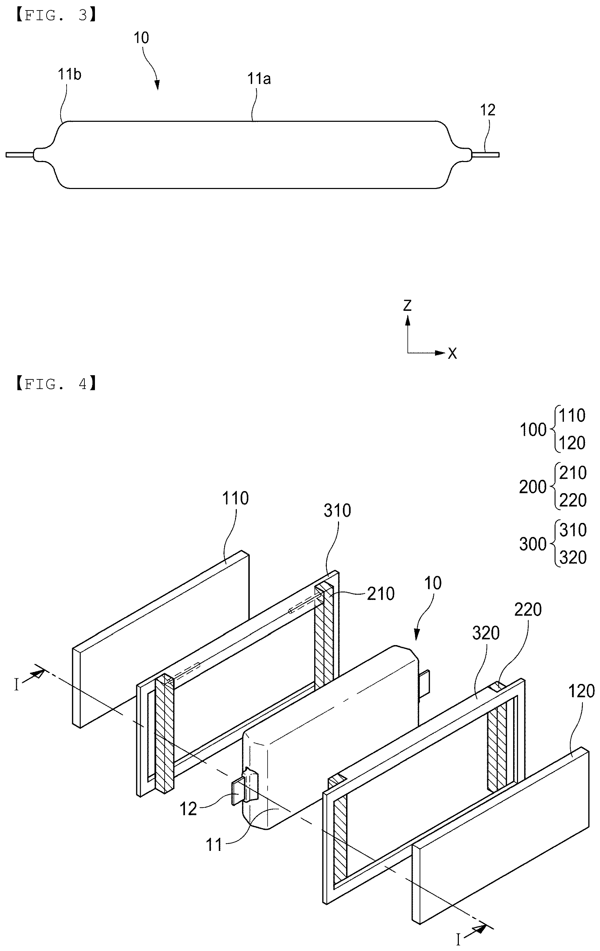

FIG. 1 is a conceptual view showing a part of a conventional pouch-shaped secondary battery pressing apparatus, FIG. 2 is a plan view illustrating a pouch-shaped secondary battery, and FIG. 3 is a side view illustrating the pouch-shaped secondary battery.

As shown in FIGs. 1 to 3, an activation process of a secondary battery 10 may be performed by pressing the secondary battery 10 disposed between a plurality of pressing plates 1 using the pressing plates 1.

However, in manufacturing an electrode constituting an electrode assembly, an electrode material is coated in a slurry state, wherein a so-called sliding region of the electrode in which a central portion of the electrode is flat while ends of the electrode become thinner due to fluidity of the slurry may be formed.

Due to the sliding region, the secondary battery 10 has a thickness deviation between a central portion and the vicinity of a tab portion thereof, forming a step, and uneven pressure is applied due to the step during the process using the formation jig, whereby quantified pressing is not possible.

### (Prior Art Document)

(Patent Document 1) Korean Patent Application Publication No. 10-2024-0044781

### [Disclosure]

### [Technical Problem]

The present invention has been made in view of the above problems, and it is an object of the present invention to provide a secondary battery pressing apparatus capable of uniformly applying pressure to a central portion and the vicinity of a tab portion of a pouch-shaped secondary battery during an activation process and a secondary battery pressing method using the same.

### [Technical Solution]

As a technical means for achieving the above object, a secondary battery pressing apparatus according to an embodiment of the present invention, which is a secondary battery pressing apparatus for pressing a secondary battery (10) including a battery case (11) receiving an electrode assembly having a pair of electrode leads (12) located opposite each other and a sealed portion (S) at an edge of the battery case (11), includes a pair of pressing plates (100) configured to press one surface and an other surface of the battery case (11) and a pair of tight contact members (200) configured to be brought into tight contact with a corner portion (11b) of the battery case (11) by the pair of pressing plates (100).

Also, in the secondary battery pressing apparatus according to the embodiment of the present invention, each of the tight contact members (200) may be made of a shape-memory alloy.

Also, in the secondary battery pressing apparatus according to the embodiment of the present invention, the shape-memory alloy may include Cu, Zn, or Al materials.

Also, the secondary battery pressing apparatus according to the embodiment of the present invention may further include a frame (300) supporting each of the tight contact members (200).

Also, in the secondary battery pressing apparatus according to the embodiment of the present invention, the frame (300) may include a first frame (310) and a second frame (320) at the one surface and the other surface of the battery case (11), respectively, the first frame (310) may be near both ends of an upper frame with a pair of first receiving holes (311) extending by a certain length in a state in which a center thereof is open, and the second frame (320) may be near both ends of an upper frame with a pair of second receiving holes (321) extending by a certain length in a state in which a center thereof is open.

Also, in the secondary battery pressing apparatus according to the embodiment of the present invention, each of the first frame (310) and the second frame (320) may be variable in length in an overall length direction of the battery case (11).

Also, in the secondary battery pressing apparatus according to the embodiment of the present invention, the tight contact members (200) may include a first tight contact member (210) and a second tight contact member (220) at the one surface and the other surface of the battery case (11), respectively, the first tight contact member (210) may be in a pair including a 1a member (211) having one side received in the first receiving hole (311) and a 1b member (212) exposed along a side frame of the first frame (310), and the second tight contact member (220) may be in a pair including a 2a member (221) having one side received in the second receiving hole (321) and a 2b member (222) exposed along a side frame of the second frame (320).

Also, in the secondary battery pressing apparatus according to the embodiment of the present invention, the 1b member (212) and the 2b member (222) may be in tight contact with corner portions (11b) of both sides of the battery case (11) facing directions in which the electrode leads (12) protrude.

Also, in the secondary battery pressing apparatus according to the embodiment of the present invention, the pair of pressing plates (100) may include a first pressing plate (110) configured to press the one surface of the battery case (11) and a second pressing plate (120) configured to press the other surface of the battery case (11), and each of the first pressing plate (110) and the second pressing plate (120) may have a length sufficient to press a corresponding one of the 1b member (212) and the 2b member (222).

Also, in the secondary battery pressing apparatus according to the embodiment of the present invention, the first frame (310) may be between the one surface of the battery case (11) and the first pressing plate (110), and the second frame (320) may be between the other surface of the battery case (11) and the second pressing plate (120).

Also, in the secondary battery pressing apparatus according to the embodiment of the present invention, the pair of pressing plates (100) may include a first pressing plate (110) configured to press the one surface of the battery case (11) and a second pressing plate (120) configured to press the other surface of the battery case (11), and each of the first pressing plate (110) and the second pressing plate (120) may be made of a metal including an aluminum material.

In addition, a secondary battery pressing method using the secondary battery pressing apparatus according to the embodiment of the present invention includes (S1) locating a secondary battery (10) between the pair of tight contact members (200) and (S2) moving the pair of pressing plates (100) to press the secondary battery (10).

Also, the secondary battery pressing method according to the embodiment of the present invention may further including heating the pair of tight contact members (200) to a preset first temperature range to shape-memory process the pair of tight contact members before step (S1) .

Also, in the secondary battery pressing method according to the embodiment of the present invention, in step (S2), heating may be performed to a second temperature range lower than the first temperature range.

### [Advantageous Effects]

As is apparent from the above description, a secondary battery pressing apparatus according to the present invention and a secondary battery pressing method using the same have the advantage that a pair of tight contact members configured to be brought into tight contact with a corner portion of a battery case is made of a shape-memory alloy such that the tight contact members can press the corner portion with a shape deformed so as to correspond to the shape of the corner portion, whereby it is possible to press a flat portion and the corner portion of the secondary battery with uniform pressure.

In addition, the secondary battery pressing apparatus according to the present invention and the secondary battery pressing method using the same have the merit that a first frame and a second frame are configured to be variable in the overall length direction of the battery case such that the first frame and the second frame can be deformed so as to correspond to the length of the secondary battery, whereby it is possible to press various sizes of secondary batteries.

### [Description of Drawings]

FIG. 1 is a conceptual view showing a part of a conventional pouch-shaped secondary battery pressing apparatus.
FIG. 2 is a plan view illustrating a pouch-shaped secondary battery.
FIG. 3 is a side view illustrating the pouch-shaped secondary battery.
FIG. 4 is an exploded perspective view illustrating a secondary battery pressing apparatus according to the present invention.
FIG. 5 is a perspective view illustrating a tight contact member of the secondary battery pressing apparatus according to the present invention.
FIG. 6 is a perspective view illustrating a frame of the secondary battery pressing apparatus according to the present invention.
FIG. 7 is a front view illustrating the frame of the secondary battery pressing apparatus according to the present invention.
FIG. 8 is a front view illustrating the state in which the tight contact member is fastened to the frame of the secondary battery pressing apparatus according to the present invention.
FIG. 9 is a side view illustrating the state in which the tight contact member is fastened to the frame of the secondary battery pressing apparatus according to the present invention.
FIG. 10 is a front view illustrating a modified frame of the secondary battery pressing apparatus according to the present invention.
FIG. 11 is a view showing the state in which the secondary battery pressing apparatus according to the present invention is located on one side and the other side of a secondary battery, when viewed from above.
FIG. 12 is a view showing that a pressing plate presses the frame and the tight contact member in the secondary battery pressing apparatus according to the present invention, when viewed from above.
FIG. 13 is a view showing the state in which the tight contact member of the secondary battery pressing apparatus according to the present invention is in tight contact with a corner portion of a battery case of the secondary battery, when viewed from above.
FIG. 14 is a view showing the state in which the tight contact member of the secondary battery pressing apparatus according to the present invention is pressed and deformed at the corner portion of the battery case, when viewed from above.
FIG. 15 is a sectional view taken along line I-I shown in FIG. 4, illustrating that the tight contact member of the secondary battery pressing apparatus according to the present invention is pressed and deformed at the corner portion of the battery case, when viewed from above.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a secondary battery pressing apparatus according to the present invention and a pressing method using the same will be described.

First, referring to FIGs. 2 and 3, a secondary battery 10 may be a pouch-shaped secondary battery including a battery case 11 configured to receive an electrode assembly (not shown) having a pair of electrode leads 12 located opposite each other and a sealed portion S provided at an edge of the battery case 11. In this case, the battery case 11 may include a first pocket portion (not shown) configured to receive the electrode assembly and a second pocket portion (not shown) configured to capture gas.

The pair of electrode leads 12 may include a positive electrode lead and a negative electrode lead.

Meanwhile, the battery case 11 is made of a laminate sheet including an outer covering layer, a metal layer, and an inner covering layer.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

Meanwhile, the electrode assembly received in the battery case 11 may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler may be further added if necessary.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, in manufacturing the electrode constituting the electrode assembly, an electrode material is coated in a slurry state, wherein a so-called sliding region of the electrode may be formed in which a central portion of the electrode is flat while the edge of the electrode becomes thinner due to fluidity of the slurry.

Accordingly, the battery case 11 in which the electrode assembly is received may be provided with a flat portion 11a corresponding to the central portion of the electrode flatly coated with the slurry and a corner portion 11b formed so as to correspond to the sliding region of the electrode.

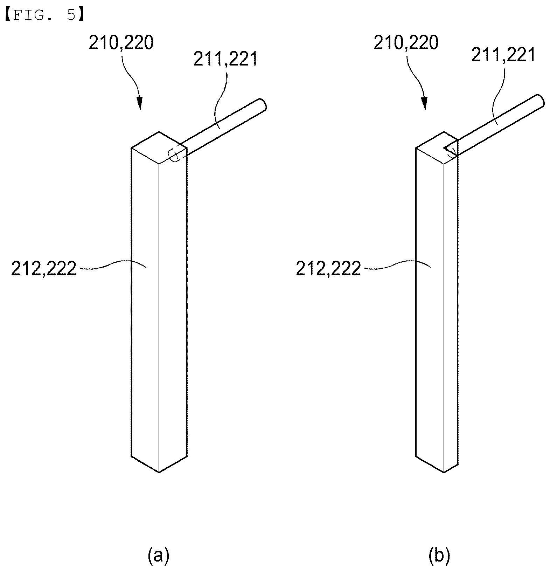

FIG. 4 is an exploded perspective view illustrating a secondary battery pressing apparatus according to the present invention, and FIG. 5 is a perspective view illustrating a tight contact member of the secondary battery pressing apparatus according to the present invention.

A secondary battery pressing apparatus according to an embodiment of the present invention for pressing a secondary battery 10 having the aforementioned configuration may include a pair of pressing plates 100, a pair of tight contact members 200, and a pair of frames 300.

The pair of pressing plates 100 may be configured to press one surface and the other surface of a battery case 11 in the state in which the secondary battery 10 is located in a vertical direction (12 o'clock to 6 o'clock direction in FIG. 4).

In this case, the pair of pressing plates 100 may include a first pressing plate 110 configured to press one surface (10 o'clock direction in FIG. 4) of the battery case 11 and a second pressing plate 120 configured to press the other surface (4 o'clock direction in FIG. 4) of the battery case 11. The first pressing plate 110 and the second pressing plate 120 may be configured to come into contact with each other in the state in which the secondary battery 10 is interposed therebetween.

In addition, each of the first pressing plate 110 and the second pressing plate 120 may be made of a material having stiffness sufficient to press a corresponding one of one surface and the other surface of the battery case 11. More specifically, each of the first pressing plate 110 and the second pressing plate 120 may be made of a metal, such as aluminum.

The pair of tight contact members 200 may be configured to be brought into tight contact with a corner portion 11b of the battery case 11 by the pair of pressing plates 100. The pair of tight contact members 200 may include a first tight contact member 210 and a second tight contact member 220 located at one surface and the other surface of the battery case 11, respectively.

More specifically, the first tight contact member 210 is configured to be brought into tight contact with the corner portion 11b of one surface of the battery case 11 by the first pressing plate 110, and a pair of first tight contact members 210 may be provided so as to correspond to a pair of corner portions 11b located so as to correspond to edges from which a pair of electrode leads 12 protrudes.

The second tight contact member 220 is configured to be brought into tight contact with the corner portion 11b of the other surface of the battery case 11 by the second pressing plate 120, and a pair of second tight contact members 220 may be provided so as to correspond to the pair of corner portions 11b located so as to correspond to the edges from which the pair of electrode leads 12 protrudes.

The tight contact member 200 may be made of a shape-memory alloy. For example, the pair of tight contact members 200 may be brought into tight contact with the corner portions 11b located at one surface and the other surface of the battery case 11 by the pair of pressing plates 100, and may be deformed into a shape corresponding to the shape of the corner portions 11b by the pressing force applied by the pressing plates 100, thereby applying uniform pressing force to the corner portions 11b.

In addition, each of the pair of tight contact members 200 is preferably made of a shape-memory alloy having high thermal conductivity. As an example, each of the pair of tight contact members 200 may be made of a shape-memory alloy including Cu, Zn, and Al materials, which have higher thermal conductivity than a titanium alloy. The pair of tight contact members 200 is brought into tight contact with the corner portions 11b, is deformed into a shape corresponding to the shape of the corner portions 11b, and then quickly returns to the original shape thereof when heated to a certain temperature.

In this case, the first tight contact member 210 may include a 1a member 211 connected to a first frame 310, which will be described later, and a 1b member 212 configured to be brought into tight contact with the corner portion 11b of one surface of the battery case 11. Here, the 1b member 212 may extend in the overall width direction of the battery case 11 so as to be brought into tight contact with the corner portion 11b of one surface of the battery case 11.

In addition, the second tight contact member 220 may include a 2a member 221 connected to a second frame 320, which will be described later, and a 2b member 222 configured to be brought into tight contact with the corner portions 11b located at a pair of edges of the other surface of the battery case 11 from which the electrode leads 12 protrude. Here, the 2b member 222 may extend in the overall width direction of the battery case 11 so as to be brought into tight contact with the corner portions 11b of the other surface of the battery case 11.

The first tight contact member 210 and the second tight contact member 220 may be formed such that the 1a member 211 and the 2a member 221 extend in the overall length direction of the battery case 11 and the 1b member 212 and the 2b member 222 extend in the overall width direction of the battery case 11.

For example, the 1b member 212 and the 2b member 222 may be formed as a cuboid extending in the overall width direction of the corner portions 11b of the battery case 11, as shown in (a) of FIG. 5, or, as another example, may be formed as a shape that wraps around a part of the corner portion 11b and can be easily deformed into a shape corresponding to the shape of the rounded corner portion 11b, as shown in (b) of FIG. 5.

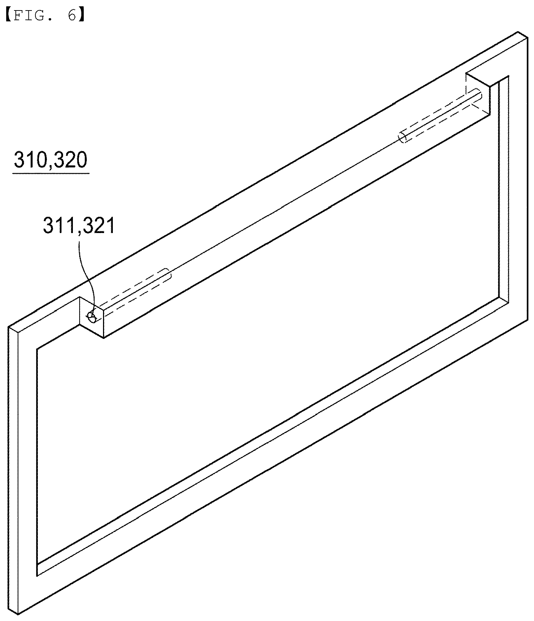

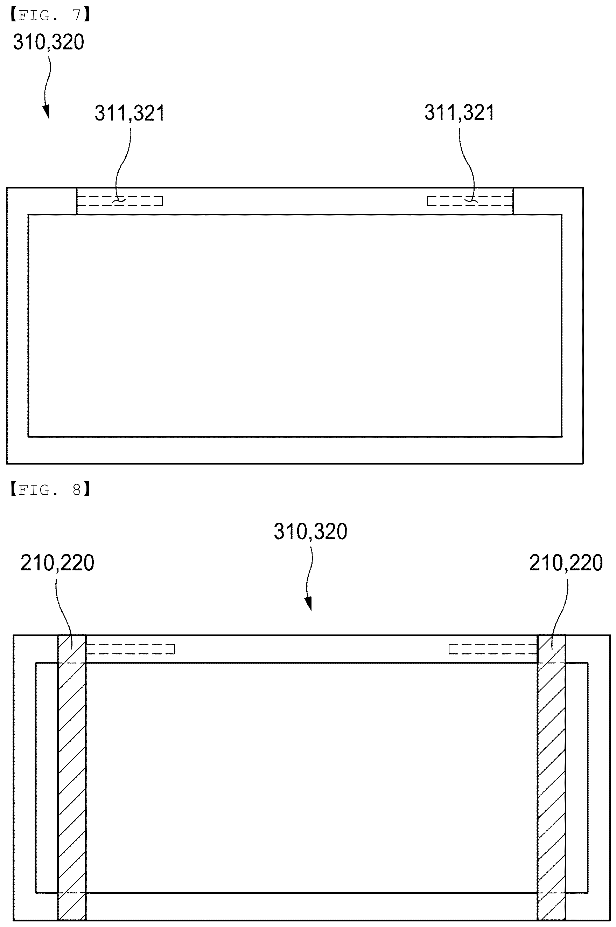

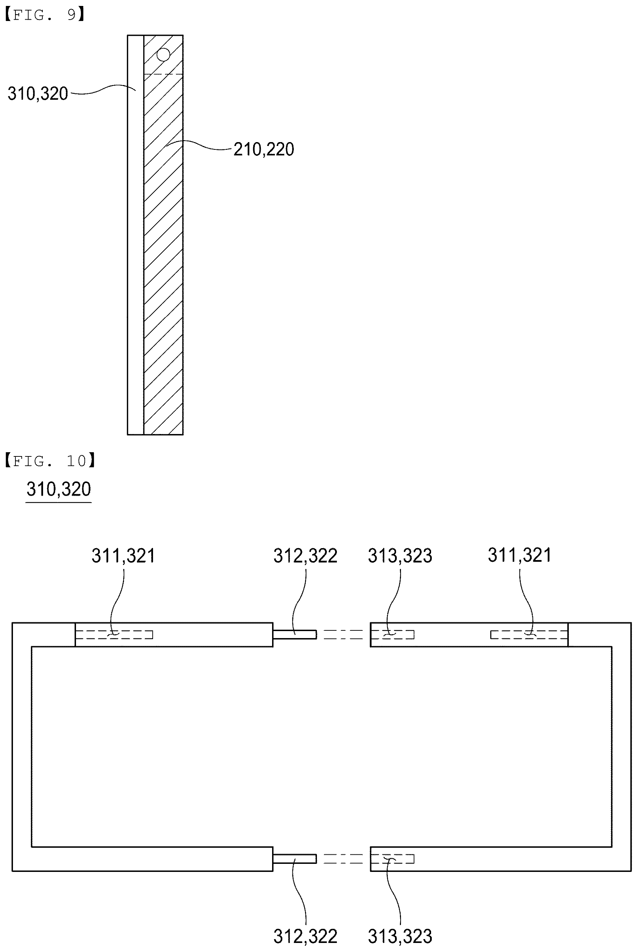

FIG. 6 is a perspective view illustrating a frame of the secondary battery pressing apparatus according to the present invention, and FIG. 7 is a front view illustrating the frame of the secondary battery pressing apparatus according to the present invention. In addition, FIG. 8 is a front view illustrating the state in which the tight contact member is fastened to the frame of the secondary battery pressing apparatus according to the present invention, and FIG. 9 is a side view illustrating the state in which the tight contact member is fastened to the frame of the secondary battery pressing apparatus according to the present invention.

Referring to FIGs. 4 to 9, the frame 300 is configured to support the tight contact member 200, and may include a first frame 310 and a second frame 320 configured to respectively support the first tight contact member 210 and the second tight contact member 220 located at one surface and the other surface of the battery case 11, respectively.

First, the first frame 310 is configured to support the first tight contact member 210, and may be provided near both ends of an upper frame with a pair of first receiving holes 311 extending by a certain length in the state in which the center thereof is open. For example, the upper frame may be configured such that a central portion thereof partially protrudes, and the first receiving holes 311 may be formed in both ends of the protruding central portion. The first receiving hole 311 may extend to a depth at which the 1a member 211 can be received therein.

In this case, the 1a member 211 of the first tight contact member 210 may be received in the first receiving hole 311, whereby the first frame 310 may be coupled to the first tight contact member 210, and the 1b member 212 of the first tight contact member 210 may be exposed along a side frame of the first frame 310.

In addition, the first receiving hole 311 may be formed at the position where the 1b member 212 can be brought into tight contact with the corner portion 11b of one surface of the battery case 11. That is, the protruding central portion of the first frame 310 may have a length corresponding to the overall length of the flat portion 11a of the battery case 11, and the 1b member 212 may be located at the corner portion 11b of the battery case 11 as the 1a member 211 of the first tight contact member 210 is received in the first receiving hole 311.

The first frame 310 is located between one surface of the battery case 11 and the first pressing plate 110, and the center thereof may be open such that the first pressing plate 110 can pass through the open center.

For example, when the first pressing plate 110 presses one surface of the battery case 11, the first pressing plate 110 may pass through the open center of the first frame 310 and press a pair of first tight contact members 210 that are partially received in the first receiving holes 311 of the first frame 310. In this case, it is preferable for the first pressing plate 110 to have a length sufficient to press the 1b members 212 of the pair of first tight contact members 210.

In addition, the second frame 320 is configured to support the second tight contact member 220, and may be provided near both ends of an upper frame with a pair of second receiving holes 321 extending by a certain length in the state in which the center thereof is open. For example, the upper frame may be configured such that a central portion thereof partially protrudes, and the second receiving holes 321 may be formed in both ends of the protruding central portion. The second receiving hole 321 may extend to a depth at which the 2a member 221 can be received therein.

In this case, the 2a member 221 of the second tight contact member 220 may be received in the second receiving hole 321, whereby the second frame 320 may be coupled to the second tight contact member 220, and the 2b member 222 of the second tight contact member 220 may be exposed along a side frame of the second frame 320.

In addition, the second receiving hole 321 may be formed at the position where the 2b member 222 can be brought into tight contact with the corner portion 11b of the other surface of the battery case 11. That is, the protruding central portion of the second frame 320 may have a length corresponding to the overall length of the flat portion 11a of the battery case 11, and the 2b member 222 may be located at the corner portion 11b of the battery case 11 as the 2a member 221 of the second tight contact member 220 is received in the second receiving hole 321.

The second frame 320 is located between the other surface of the battery case 11 and the second pressing plate 120, and the center thereof may be open such that the second pressing plate 120 can pass through the open center.

For example, when the second pressing plate 120 presses the other surface of the battery case 11, the second pressing plate 120 may pass through the open center of the second frame 320 and press a pair of second tight contact members 220 that are partially received in the second receiving holes 321 of the second frame 320. In this case, it is preferable for the second pressing plate 120 to have a length sufficient to press the 2b members 222 of the pair of second tight contact members 220.

FIG. 10 is a front view illustrating a modified frame of the secondary battery pressing apparatus according to the present invention.

This is identical to the embodiment of the secondary battery pressing apparatus according to the present invention described above, except for the configuration of the first frame 310 and the second frame 320. Each of the first frame 310 and the second frame 320 may be configured to be variable in length in the overall length direction of the battery case 11.

First, the first frame 310 may be further provided with a first insertion member 312 and a first insertion recess 313 formed at positions that do not interfere with the first receiving holes 311 formed at both ends of the upper frame.

For example, the first insertion member 312 and the first insertion recess 313 may be formed in the central portion of the upper frame. More specifically, the first insertion member 312 may protrude and extend to one side at one end thereof, and may have a size and shape that can be inserted into the first insertion recess 313. In addition, the first insertion recess 313 may be formed as a recess having a length corresponding to the extending length of the first insertion member 312.

The first insertion member 312 and the first insertion recess 313 may be engaged with or male-female coupled to each other so as to be linearly movable relative to each other. Accordingly, the first insertion member 312 may be reciprocally movable in the extension direction of the first insertion recess 313, and this reciprocal movement may cause the length of the first frame 310 in the overall length direction to be changed so as to correspond to the overall length of the battery case 11.

In this case, the first insertion member 312 and the first insertion recess 313 may be formed such that there is no clearance between the coupling space in which the first insertion member and the first insertion recess are engaged with each other, whereby the first insertion member 312 is reciprocally movable in the extension direction of the first insertion recess 313 only upon application of certain force or higher.

The first insertion member 312 and the first insertion recess 313 may be equally formed at a lower frame of the first frame 310.

In addition, the second frame 320 may be further provided with a second insertion member 322 and a second insertion recess 323 formed at positions that do not interfere with the second receiving holes 321 formed at both ends of the upper frame.

For example, the second insertion member 322 and the second insertion recess 323 may be formed in the central portion of the upper frame. More specifically, the second insertion member 322 may protrude and extend to one side at one end thereof, and may have a size and shape that can be inserted into the second insertion recess 323. In addition, the second insertion recess 323 may be formed as a recess having a length corresponding to the extending length of the second insertion member 322.

The second insertion member 322 and the second insertion recess 323 may be engaged with or male-female coupled to each other so as to be linearly movable relative to each other. Accordingly, the second insertion member 322 may be reciprocally movable in the extension direction of the second insertion recess 323, and this reciprocal movement may cause the length of the second frame 320 in the overall length direction to be changed so as to correspond to the overall length of the battery case 11.

In this case, the second insertion member 322 and the second insertion recess 323 may be formed such that there is no clearance between the coupling space in which the second insertion member and the second insertion recess are engaged with each other, whereby the second insertion member 322 is reciprocally movable in the extension direction of the second insertion recess 323 only upon application of certain force or higher.

The second insertion member 322 and the second insertion recess 323 may be equally formed at a lower frame of the second frame 320.

The adoption of the modified frame, which may be variable in length in the overall length direction of the battery case 11 as described above, is very useful when pressing a plurality of battery cases 11 having different overall lengths.

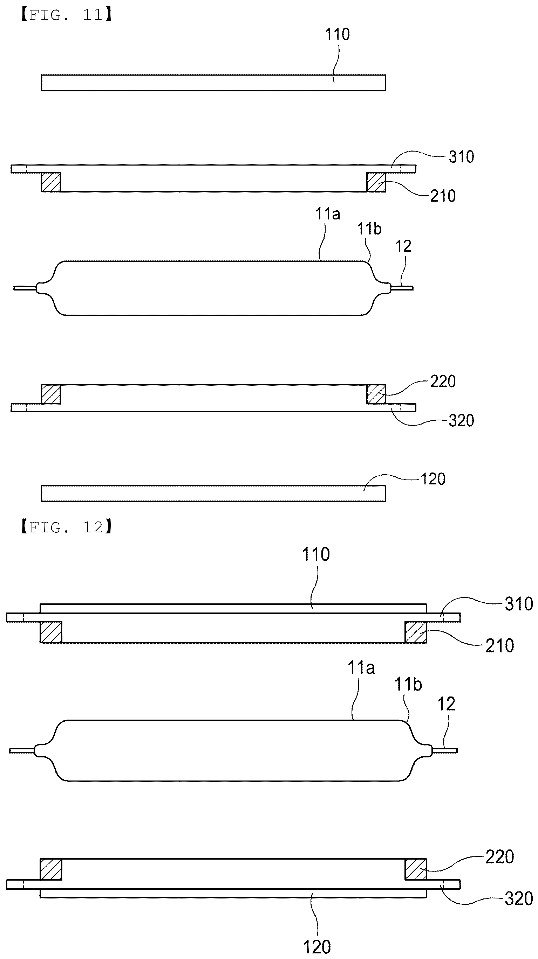

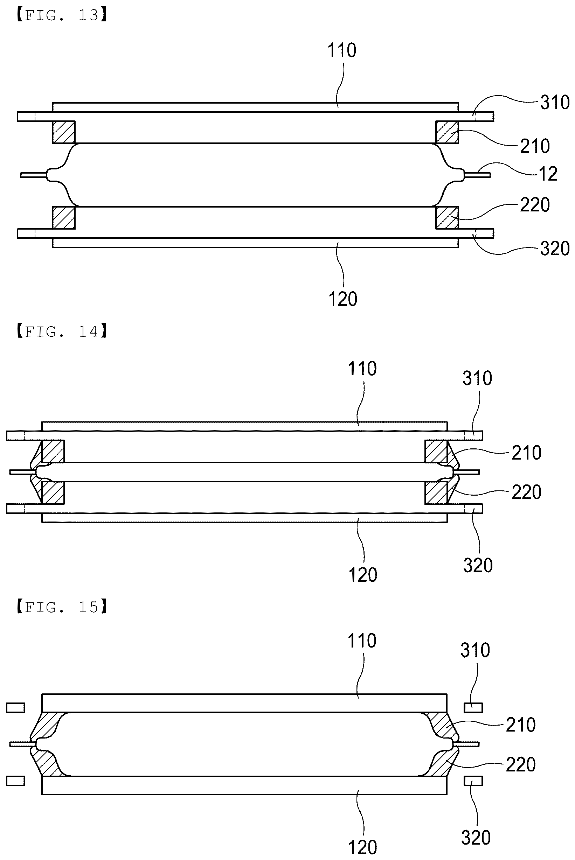

FIG. 11 is a view showing the state in which the secondary battery pressing apparatus according to the present invention is located on one side and the other side of a secondary battery, when viewed from above, and FIG. 12 is a view showing that a pressing plate presses the frame and the tight contact member in the secondary battery pressing apparatus according to the present invention, when viewed from above. In addition, FIG. 13 is a view showing the state in which the tight contact member of the secondary battery pressing apparatus according to the present invention is in tight contact with a corner portion of a battery case of the secondary battery, when viewed from above, and FIG. 14 is a view showing the state in which the tight contact member of the secondary battery pressing apparatus according to the present invention is pressed and deformed at the corner portion of the battery case, when viewed from above. In addition, FIG. 15 is a sectional view taken along line I-I shown in FIG. 4, illustrating that the tight contact member of the secondary battery pressing apparatus according to the present invention is pressed and deformed at the corner portion of the battery case, when viewed from above.

Referring to FIGs. 4 to 9 and 11 to 15, a secondary battery pressing method using the secondary battery pressing apparatus according to the present invention includes the steps of (S1) locating a secondary battery 10 between the pair of tight contact members 200 and (S2) moving the pair of pressing plates 100 to press the secondary battery 10.

In addition, the method may further include heating the pair of tight contact members 200 to a preset first temperature range, such as a range of 90°C to 110°C, to shape-memory process the pair of tight contact members 200 before step (S1).

Also, in step (S2), the secondary battery 10 may be pressed while heating the pair of tight contact members 200 to a second temperature range, such as a range of 50°C to 80°C, which is lower than the first temperature range at which the pair of tight contact members 200 is shape-memory processed.

Also, in step (S2), the pair of pressing plates 100 is moved toward the secondary battery 10, and the pair of tight contact members 200 and the pair of frames 300 may also be moved in response to the movement of the pair of pressing plates 100.

Also, in step (S2), the first pressing plate 110 is moved to the other side (6 o'clock direction in FIG. 12) in order to press one surface (12 o'clock direction in FIG. 11) of the battery case 11. At this time, the first pressing plate 110 may also press the first tight contact member 210, and may be moved to the other side together with the first tight contact member 210 and the first frame 310.

Also, in step (S2), the first pressing plate 110 may press one surface (12 o'clock direction in FIG. 14) of the battery case 11 and at the same time press one surface (12 o'clock direction in FIG. 14) of the first tight contact member 210 such that the first tight contact member 210 can press the corner portion 11b of one surface of the battery case 11.

At this time, since the first tight contact member 210 is pressed with a shape deformed so as to correspond to the shape of the corner portion 11b of one surface of the battery case 11, uniform pressing force may be applied to the corner portion 11b.

Also, in step (S2), the second pressing plate 120 is moved to one side (12 o'clock direction in FIG. 12) in order to press the other surface (6 o'clock direction in FIG. 11) of the battery case 11. At this time, the second pressing plate 120 may also press the second tight contact member 220, and may be moved to one side together with the second tight contact member 220 and the second frame 320.

Also, in step (S2), the second pressing plate 120 may press the other surface (6 o'clock direction in FIG. 14) of the battery case 11 and at the same time press the other surface (6 o'clock direction in FIG. 14) of the second tight contact member 220 such that the second tight contact member 220 can press the corner portion 11b of the other surface of the battery case 11.

At this time, since the second tight contact member 220 is pressed with a shape deformed so as to correspond to the shape of the corner portion 11b of the other surface of the battery case 11, uniform pressing force may be applied to the corner portion 11b.

After step (S2), i.e., after an activation process, in order to press a new secondary battery, the first tight contact member 210 and the second tight contact member 220 may be heated to the first temperature range to restore the shapes of the first tight contact member 210 and the second tight contact member 220 to the original shapes thereof.

A pressing method using the secondary battery pressing apparatus according to the modification of the present invention shown in FIG. 10 is identical to the secondary battery pressing method described above.

However, the pressing method may further include a step of varying the lengths of the first frame 310 and the second frame 320 so as to correspond to the overall length of the battery case 11 before step (S2).

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

- 10:: Secondary battery
- 11:: Battery case
- 11a:: Flat portion 11b: Corner portion
- 12:: Electrode lead
- 100:: Pressing plate
- 110:: First pressing plate
- 120:: Second pressing plate
- 200:: Tight contact member
- 210:: First tight contact member
- 211:: 1a member 212: 1b member
- 220:: Second tight contact member
- 221:: 2a member 222: 2b member
- 300:: Frame
- 310:: First frame
- 311:: First receiving hole
- 312:: First insertion member
- 313:: First insertion recess
- 320:: Second frame
- 321:: Second receiving hole
- 322:: Second insertion member
- 323:: Second insertion recess

## Claims

1. A secondary battery pressing apparatus for pressing a secondary battery comprising a battery case receiving an electrode assembly having a pair of electrode leads located opposite each other and a sealed portion at an edge of the battery case, the secondary battery pressing apparatus comprising:
a pair of pressing plates configured to press one surface and an other surface of the battery case; and
a pair of tight contact members configured to be brought into tight contact with a corner portion of the battery case by the pair of pressing plates.

2. The secondary battery pressing apparatus according to claim 1, wherein each of the tight contact members is made of a shape-memory alloy.

3. The secondary battery pressing apparatus according to claim 2, wherein the shape-memory alloy comprises Cu, Zn, or Al materials.

4. The secondary battery pressing apparatus according to claim 2, further comprising a frame supporting each of the tight contact members.

5. The secondary battery pressing apparatus according to claim 4, wherein
the frame comprises a first frame and a second frame at the one surface and the other surface of the battery case, respectively,
the first frame is near both ends of an upper frame with a pair of first receiving holes extending by a certain length in a state in which a center thereof is open, and
the second frame is near both ends of an upper frame with a pair of second receiving holes extending by a certain length in a state in which a center thereof is open.

6. The secondary battery pressing apparatus according to claim 5, wherein each of the first frame and the second frame is variable in length in an overall length direction of the battery case.

7. The secondary battery pressing apparatus according to claim 5, wherein
the tight contact members comprise a first tight contact member and a second tight contact member at the one surface and the other surface of the battery case, respectively,
the first tight contact member is in a pair comprising a 1a member having one side received in the first receiving hole and a 1b member exposed along a side frame of the first frame, and
the second tight contact member is in a pair comprising a 2a member having one side received in the second receiving hole and a 2b member exposed along a side frame of the second frame.

8. The secondary battery pressing apparatus according to claim 7, wherein the 1b member and the 2b member are in tight contact with corner portions of both sides of the battery case facing directions in which the electrode leads protrude.

9. The secondary battery pressing apparatus according to claim 2, wherein
the pair of pressing plates comprises a first pressing plate configured to press the one surface of the battery case and a second pressing plate configured to press the other surface of the battery case, and
each of the first pressing plate and the second pressing plate has a length sufficient to press a corresponding one of the 1b member and the 2b member.

10. The secondary battery pressing apparatus according to claim 9, wherein
the first frame is between the one surface of the battery case and the first pressing plate, and
the second frame is between the other surface of the battery case and the second pressing plate.

11. The secondary battery pressing apparatus according to claim 2, wherein
the pair of pressing plates comprises a first pressing plate configured to press the one surface of the battery case and a second pressing plate configured to press the other surface of the battery case, and
each of the first pressing plate and the second pressing plate is made of a metal comprising an aluminum material.

12. A secondary battery pressing method using the secondary battery pressing apparatus according to any one of claims 1 to 11, the secondary battery pressing method comprising:
(S1) locating a secondary battery between the pair of tight contact members; and
(S2) moving the pair of pressing plates to press the secondary battery.

13. The secondary battery pressing method according to claim 12, further comprising heating the pair of tight contact members to a preset first temperature range to shape-memory process the pair of tight contact members before step (S1).

14. The secondary battery pressing method according to claim 12, wherein, in step (S2), heating is performed to a second temperature range lower than the first temperature range.
